# EUROPEAN PATENT SPECIFICATION

(11) **EP 2 515 500 B1**
(45) Date of publication and mention of the grant of the patent: **01.08.2018**
(21) Application number: 12157024.6
(22) Date of filing: 26.02.2012
(51) Int. Cl.: H04L 29/06, G06F 21/32, H04W 12/06

(54) **Method and mobile station for sequential biometric authentication**
Methode und mobile Station für sequentielle biometrische Authentifikation
Procédé et station mobile pour l'authentification biométrique séquentielle

(30) Priority: 18.04.2011 EP 11162916
(43) Date of publication of application: 24.10.2012
(73) Proprietor: Blessing, Werner, 6048 Horw (CH)
(72) Inventor: Norbisrath, Ulrich, Gillette, WY Wyoming 82716 (US); Blessing, Werner, 6048 Horw (CH)
(74) Representative: Rutz & Partner

(56) References cited:
- EP-A1- 2 037 421
- US-A1- 2002 194 003
- US-A1- 2007 250 322
- US-A1- 2009 060 170
- US-A1- 2010 291 909

## Description

The present invention relates to a method for performing sequential biometric authentication of a user with increased reliability and reduced effort as well as to a mobile station incorporating a biometric authentication system operating according to this method.

### BACKGROUND OF THE INVENTION

Biometric authentication systems are used in different fields of application to identify and verify the identity of individuals.

In [1], A. Jain et al., BIOMETRICS, Personal Identification in Networked Society, Kluwer Academic Publication, Massachusetts 2002, chapter 4, page 4, the following seven factors are identified for the qualification of a biometric in view of usability for authentication purposes. "UNIVERSALITY", requiring that every person using a system has the characteristic or the trait; "UNIQUENESS", requiring that only one person has the same embodiment of the characteristic; "PERMANENCE", requiring that the characteristic is invariant with time; "COLLECTABILITY", requiring that the characteristic can be measured quantitatively; "PERFORMANCE", referring to achievable identification accuracy, speed, and robustness; "ACCEPTABILITY", referring to the extent people are willing to accept the biometric system and "CIRCUMVENTION", referring to the robustness against fraudulent attacks.

With the technological advance in this field, biometric authentication systems have been developed exhibiting low equal error rates EER that ensure strong authentication of an individual. E.g. in [2], EP1962280A1, a method for a multimodal biometric authentication system is disclosed that uses dynamic simultaneous authentication of interlinked biometric traits. This network-based biometric system allows reliable biometric authentication of an individual by means of an authentication server, which is accessible over a network from end user terminals that are equipped with audio- and video-recording devices and which are designed for simultaneously capturing biometric audio and video samples from the end user. During enrolment of an end user, biometric audio and video samples are simultaneously captured and stored in a database. For on-line authentication of the end user, biometric audio and video samples are simultaneously captured for speech elements expressed by the end user in response to a challenge relating to randomly assembled speech elements. By comparing the online captured biometric audio and video data with correspondingly assembled biometric data retrieved from the database the end user can be authenticated with a negligible failure rate.

Hence, this system optimally meets all of the above described factors but one. Depending on the transactions planned by the end user acceptability of this method may not be optimal. In the event that transactions, particularly financial transactions, with a high transaction value are planned, then the described method is not only acceptable but highly desirable. However, for routine transactions, such as entering a building or opening a car the described challenge response procedure is rather undesirable. Hence, this system suffers from low "ACCEPTABILITY" in a specific range of transactions.

In other biometric systems not only the factor "ACCEPTABILITY" but also the factor "PERMANENCE" creates problems. E.g., the region of a user's face may change from time to time. The user may change glasses, earrings, the hairdressing or possibly the make-up causing false rejections during authentication procedures. Use of the related biometric characteristics is therefore questionable in view of the conditions defined in [1] .

The factors "ACCEPTABILITY" and "PERMANENCE" are interlinked; i.e. low acceptability leads to bad permanence. The user does not accept to pose, look and behave uniformly for authentication procedures. Characteristics are therefore not permanently exhibited in the same way and may significantly change from time to time.

A user typically accepts specific authentication conditions when being interested in a desired transaction. However, in the event that the transaction is in the interest of a third-party such authentications are typically considered awkward and disturbing.

Particularly in a distributed biometric authentication system, which uses a common terminal for authentication purposes, an end user is performing various different transactions that are related to a direct personal interest of the user or to an interest of a third-party, e.g. a third-party protecting own interests such as allowing only authorised people access to premises. Further, transactions executed in personal interest or in interest of third parties may relate to transaction values that are widely spread. Entry into an office building may be uncritical, i.e. of little value or potential damage, while entry to a military complex may be extremely critical and of high value or potential damage.

In [3], US2010/291909A1, a method for initiating a call session is disclosed that comprises the steps of capturing biometric data from a user of a first mobile station, sending the biometric data from the first mobile station to the second mobile station; and comparing the received biometric data in the second mobile station with biometric data stored in records within a contacts database to determine if there is at least a partial match. The first mobile station comprises for example a camera that can take a facial image from the user, which is sent to the second mobile device for authentication purposes.

In [4], EP2037421A1, a method is disclosed that allows controlling the operations of a mobile station by obtaining biometric information about an ear of a user and identifying the user by processing the biometric information.

In [5], US2007/250322A1, a method is disclosed that allows verification of an identity of a user of a subscriber of a communication service that requires authentication of the user. The verification includes comparing a reference biometric with at least one biometric characteristic detected from a biometric sample of the subscriber. The biometric sample can be speech utterances, a hand, a finger, the face, the eye and/or the keyboard use profile of the user.

Hence, the methods disclosed in [3], [4] and [5] teach individually capturing at least one biometric characteristic, e.g. from the face, the ear, the hand, the eye or the voice of a user of a mobile station.

It is therefore an object of the present invention to provide an improved method for performing secure biometric authentication.

Particularly, it is an object of the present invention to provide an improved authentication method that exhibits high user acceptability as well as high tolerance for reduced user permanence.

More particularly, it is an object of the present invention to provide an improved method allowing authentication by using a mobile station in a distributed authentication system and/or for transactions having a transaction value that may vary in the wide range.

Further, it is an object of the present invention to provide an improved method that allows strong authentication with least effort by the user. Particularly, the inventive method shall have a high scalability so that the authentication mechanisms can easily be adapted to required levels, allowing performing strong authentication for midrange-value transactions with negligible efforts and optimised authentication with low efforts for high-value transactions, thus providing an overall secure, efficient and well accepted authentication system.

It is a further object of the present invention to provide a mobile station incorporating a biometric authentication system operating according to the inventive method.

### SUMMARY OF THE INVENTION

The above and other objects of the present invention are achieved by a method as defined in claim 1. The invention therefore allows capturing highly significant characteristics of a user without requiring any effort by the user. The invention exploits the fact that the user routinely performs actions when accepting or initiating a call that allow implementation of authentication procedures.

Hence, these routine actions are incorporated into the biometric authentication processes so that the user will not notice that biometric authentication processes take place. Hence, strong biometric authentication processes can be executed without causing inconvenience to the user. Consequently the inventive biometric authentication procedures will profit from a high acceptability.

In a first sequence, when initiating a call on a mobile station, the user looks at the display or keyboard. In this position optical information of the front profile of the user's face and/or parts thereof can be captured. During the capturing process the mobile station or its display can emit light allowing obtaining video data of high-quality if the ambient light is insufficient.

As soon as the call has been initiated, e.g. by pushing a related key the user will swing the mobile station towards the ear. Typically, the front side of the mobile station will further be directed towards the face of the user so that after a movement of 90° the camera will see the user's profile from the right or left side. Hence in this second sequence the camera can capture the side profile of the user's face and/or parts thereof.

Afterwards the hand of the user will approach the ear allowing the camera to capture optical information relating to the ear of the user in a third sequence.

The camera may take a number of high resolution photographs or may capture a short video stream incorporating all three sequences in a single file.

In a similar manner authentication can be performed when receiving an incoming call. The camera can be started, when the incoming call is signalled or as soon as the user has accepted the call by pushing the corresponding button. Typically the user will look at the display for viewing the calling party and then accept the call. During this period the first sequence of capturing biometric data will take place as described above. Various characteristics of the front face, such as characteristics the eyes or the mouth and/or nose region, can be involved in the authentication procedures.

Afterwards the mobile station is guided to the ear and the conversation is started. In this period, information relating to the side profile of the face in a second sequence and relating to the profile of the ear in a third sequence is captured and then analysed and matched with pre-stored data.

According to the invention numerous characteristics of the human head and face can be captured by this process providing a high redundancy of information. Some optical information may correctly reflect the specific characteristics of the user, while others may have reduced quality. In one authentication suite, optical information relating to the lips, the eyes, the nose taken from the side profile and the ear may be of high quality and not covered allowing good match of the data and extremely strong authentication. In another authentication suit, the user may wear sunglasses preventing capturing a correct image of the eye region while other factors are optimal. In another authentication suite the user may wear an earring or may have hairs covering the ear. Due to the high redundancy of the information gathered, some of the significant characteristics can always be identified and matched with pre-stored data, thus compensating for any other deficiency.

Due to the high redundancy of the information gathered not only strong authentication can be achieved but also a high tolerance in view of permanence. Authentication will be successful with a specified number of characteristics successfully taken and matched. Stored data may automatically be updated in the event that authentication has successfully been performed. The system preferably automatically stores different incarnations of a specific characteristic if the quality of the captured optical information for other characteristics is high enough and authentication has been successful.

Due to the high redundancy, the inventive biometric system can further adapt to the various changes of the appearance of the user while avoiding false rejections. The system will for example recognise that the user wears for example glasses or an earring, which in a future authentication suite will become new characteristics for matching. For example, in a first authentication suite, matching of the biometric data of the eyes will fail, because the user is wearing new glasses. However, authentication of the user will still be possible due to the matching of data relating to other biometric characteristics. After successful authentication, the system will store the biometric data of the eye region as a second option or template. In the event that the user is still wearing the glasses during the next authentication suite, then a match will be obtained by selecting data relating to the image of the eyes with glasses that previously had been stored as a further matching option or template.

Consequently the authentication system will continuously learn and adapt to several appearances of the user, and will thus exhibit a high tolerance in view of a possible deficit in permanence.

Depending on the result of the performed authentication defined actions are performed. For example the function of the mobile station may be enabled or disabled or the user may be requested to perform the authentication suite again. Due to the high redundancy of the information collected this will rarely be necessary. However, repeating authentication procedures can be done with minimal effort. After successful authentication, permission can be granted to perform transactions of one or more categories or to perform transactions limited to a specific transaction value.

The success level of grade of authorisation is preferably registered with reference to the success rate of authentication. In the event that all characteristics had been matched, maximum authentication can be granted. In the event that only one characteristic had been matched, then the lowest level of authorisation is granted.

In a preferred embodiment, a trust level value is maintained and adjusted in accordance with the results of the performed authentication processes. The trust level value is altered in increments or decrements. For example, the trust level value is decremented by one unit per hour. With a successful authentication when using the mobile station, the trust level value is incremented by a number represented by the number or the square of the number of characteristics successfully matched. In the event that for three characteristics a match has been reached, then the trust level value may be incremented by nine units.

In a preferred embodiment, in order to elevate authentication strength the biometric system also captures samples of the voice of the user during the enrolment process and matches these samples with samples captured during the later use of the mobile station. Thereby, the biometric system can use simple challenge response procedures or advanced challenge response procedures. Further, the biometric system can collect frequently spoken greeting words and names that can be used for speech recognition. By these measures, important information can be gained, without burdening the user with enrolment procedures.

The authentication procedures may be performed hidden in the background so that the processes will not be noticed by the user. Consequently with frequent use of the mobile station, the biometric system will always be up-to-date and will be adapted to one or more appearances of the user. The described authentication procedures are therefore normally performed without intentional involvement and awareness of the user.

Preferably the steps for authenticating the user are performed as described above with sequential redundant authentication. With successful authentication according to the above described method, authorisation will be granted for performing a transaction of a first group of transactions or for a transaction having a limited transaction value. Still, considering the number of characteristics evaluated, a high confidence value or a high trust level can be assigned to a successful authentication according to this first method.

However, in a preferred embodiment, an extremely strong second authentication of the user is performed with a further method for obtaining a fixed or variable trust level that allows performing a transaction of a second group of high-level transactions or for a transaction exceeding said limited transaction value.

Preferably a method is applied as described in [2], that involves simultaneously capturing related audio and video information in response to a challenge relating to stored biometrics of the user. Preferably a challenge is used that consists of randomly assembled speech fragments for which corresponding speech fragments had been captured from the user during an enrolment process. However, this method can advantageously be combined with the method described above.

In this embodiment, a dual stage biometric system is preferably integrated into the mobile station with a first stage using sequential redundant matching or authentication and the second stage using simultaneous matching or authentication reaching equal error rates near zero in a relatively broad range. The second stage can be implemented in the fourth sequence of the first method.

In preferred embodiments, the biometric system is fully integrated into the mobile station. Hence, all required actions can easily be controlled by the program of the biometric system implemented in the mobile station.

The biometric system can be initialised in a simple manner by requesting the user to perform a required action. Most easily the biometric system is initialised by simulating a call to the user. The user will pick up the mobile station and will accept the call initiated by the biometric system, which is greeting the user and is asking to speak words or sentences in order to get accustomed to the user's voice and select corresponding data. Further, if the biometric system supports the second method using random challenge response, then the user may be requested to repeat words or word fragments that are used for assembling random challenges.

In this manner the user is not burdened with procedures but will automatically and most conveniently be enrolled in the biometric system.

The enrolment process is preferably automatically initiated when the mobile station and is purchased and used for the first time. Under this condition it is assumed that the enrolled person is the rightful user of the mobile station. In the event that the enrolment process needs to be repeated at a later stage strong authentication is preferably performed by means of a method using a multimodal biometric system as described in [2].

After the biometric system has been initialised the incorporated biometric system or the central authentication server can further be trained and updated with data gained each time the user is using the mobile station.

Alternatively or in addition, further authentication techniques can be applied in the mobile station. With the first and the second authentication method direct activities of the user are evaluated, either while operating the mobile station or while actively performing authentication procedures.

With a third method, authentication can be performed by observing the behaviour of the user, which behaviour is embossed into the authentication intelligence of the mobile station or the intelligence of a central instance such as a trust center. The authentication system registers the influence of the behaviour of the user onto the mobile station, which provides valuable authentication information.

The authentication system preferably registers
a) influences caused by characteristic movements during the walk of the user; and/or
b) influences of local networks that are routinely passed by the user; and/or
c) calls to subscribers that are routinely called; and/or
d) sequences of command entries that are routinely executed.

After data relating to the user's behaviour have been stored, the authentication server observes deviations from the embossed behaviour and preferably reduces the assigned trust level or confidence level accordingly.

Mechanical impacts onto the mobile station when being carried by the user will cause a typical pattern unique to this user. In the event that a third-party uses the mobile station, this pattern will change. The change of this pattern will be detected with the program consequences, e.g. of decrementing the trust level and/or of requesting authentication, preferably according to the first method.

Further, by observing the signatures of the networks along the path the user traverses every day, the trust level can be adapted accordingly. When observing known network signatures preferably in defined timeslots the trust level is preferably incremented, while the detection of new network signatures preferably causes a decrement of the trust level.

Further, preferably numbers are registered that are frequently called by the user. Calling such a registered number would again lead to an increment of the trust level, while calling a new number would lead to a decrement of the trust level.

The inventive method therefore allows efficient and almost effortless authentication of the user of a mobile station.

Most beneficial is the application of the inventive method in a distributed authentication system or network that comprises at least said mobile station that comprises a local, i.e. incorporated authentication server and/or that is connectable via at least one communication network to a central authentication server and/or to at least one service provider.

This preferred embodiment is based on the idea of using the mobile station as a single key that provides access to various services. For this purpose it is again desirable to maintain a high trust level that reliably indicates that the holder of the mobile station or access key is the rightful user and owner of the mobile station.

In the distributed authentication network besides the service providers a centralised authentication server is provided that coordinates authentication procedures and uses the authentication resources of the inventive mobile stations.

The mobile station performs local authentication procedures in order to authenticate the user of the mobile station and is tracking a variable local trust level indicating the result of the local authentication procedures and is accessing or being provided access to the distributed authentication system only, if the local trust level lies above a local threshold that may be stored locally or centrally.

The centralised authentication server is performing central authentication procedures in order to authenticate the user of the mobile station and is tracking a variable central trust level for the mobile station indicating the result of the central authentication procedures.

The centralised authentication server or the service provider is comparing the central trust level with a central threshold assigned to a requested service and providing access to the related service only, if the central trust level lies above the central threshold.

The inventive method therefore uses all distributed resources of the distributed authentication system to efficiently and reliably authenticate a subscriber or user. Authentication processes are preferably implemented in the centralised authentication server and in the mobile stations making it difficult for an impostor or attacker to deceive the system.

Seen from the attacker, the inventive method operates with a multiplied power and not only with a linear increase of protection. The inventive method tackles and counters the most critical attacking methods, such as man-in-the-middle attacks, creating an authentication complexity, which is extremely difficult to handle for an attacker and at the same time does not burden the user. Due to the implementation of interacting authentication mechanisms in the mobile station and the authentication server, flexibility and scalability are reached that allow efficient implementation of the inventive method for the complete bandwidth of authentication applications. The complexity of the interacting central and peripheral authentication mechanisms can selectively be reduced for low level transactions, such as simple access control, or increased to the highest level required for high-level transactions, such as bank transactions. With changes of the configuration of the authentication mechanisms and their interactions the authentication system can be changed completely so that an attacker will not be able to rely on historical data.

The inventive authentication system can be used for securely handling high-level transactions but also allows access control for entities that require a comparatively low level of security, e.g. to entities, such as cars, that are typically protected by conventional keys systems. In this respect the mobile station, typically a mobile phone, replaces the car key and at the same time provides a higher level of security. The inventive authentication system therefore allows secure execution of transactions over the complete bandwidth of security requirements. At the same time the inventive authentication system individually adapts the complexity of the authentication procedures to the required level of authentication confidence.

A first and important authentication step is performed by the mobile station that preferably does not enter the distributed authentication system or network if the local trust level established by the mobile station is below a local threshold. Hence, when the centralised authentication server receives a request from the mobile station, a significant authentication confidence is already established. Preferably, the local trust level established in the mobile station is communicated to the centralised authentication server, which may accept or fully or partially reject a service request if the local trust level is considered insufficient. If the local trust level is insufficient the centralised authentication server may block the related mobile station completely and may inform the other system entities accordingly.

For low-level transactions, the centralised authentication server or service providers, in compliance with an agreement with the user, can rely on the local trust level communicated by the mobile station and grant the requested services without further authentication.

If the local trust level and/or the central trust level are considered insufficient for granting a service request, then the centralised authentication server will return an authentication request to the mobile station preferably with instructions defining the authentication procedures required.

Together with the instructions the centralised authentication server can send a challenge, such as a word or sentence, to the mobile station, requesting audio data and/or video data of the spoken response. Preferably, audio data and video data are requested that correspond to one another.

According to the invention, each service provider can specify its own requirements. The group of service providers can advantageously include the user, who possesses assets, such as a car or a house that provide transport and housing services. Consequently, such an asset also represents a service provider, which in principle does not differ from any other service provider and can be handled likewise.

Service providers can be online connected to the centralised authentication server or can be operated off-line, requesting the required data from the mobile station that acts for the centralised authentication server as a relay station. Service providers can be online and off-line in specific time periods. When a service provider is off-line, information may be requested from the mobile station that has stored data such as the central trust level reported by the centralised authentication server. In this respect the distributed use of central and local authentication mechanisms and their interaction is of special benefit.

Messages exchanged over the distributed authentication network are preferably structured according to a proprietary communication protocol. Each message comprises a frame and content. The service provider may therefore look up the local trust level value and/or the central trust level value in specific sections of the transferred frame.

### BRIEF DESCRIPTION OF THE DRAWINGS

Some of the objects and advantages of the present invention have been stated, others will appear when the following description is considered together with the accompanying drawings, in which:
- Fig. 1a-c: show a mobile station 1 provided with a biometric authentication system designed for executing at least a first inventive authentication method with sequential redundant authentication processes S1, ..., S4;
- Fig. 2a-c: show a flow diagram illustrating an embodiment of a program flow executed when running through the sequences or process steps S1, ..., S4;

- Fig. 3: shows an embodiment of an inventive distributed authentication system with a mobile station 1, an authentication server 2 and several service providers 31, 32, 33, 34 that are interconnected via a plurality of networks 51, 52, 53₁, 53₂, 53₃;
- Fig. 4: shows message transfers within the distributed authentication system shown in figure 3;
- Fig. 5: shows a further message transfers and activities within the distributed authentication system shown in figure 3;
- Fig. 6: the registration of a user at the authentication server 2 that is used by a registration authority; and
- Fig. 7: the mobile station 1 more detailed.

### DETAILED DESCRIPTION OF THE PREFERRED EMBODIMENTS

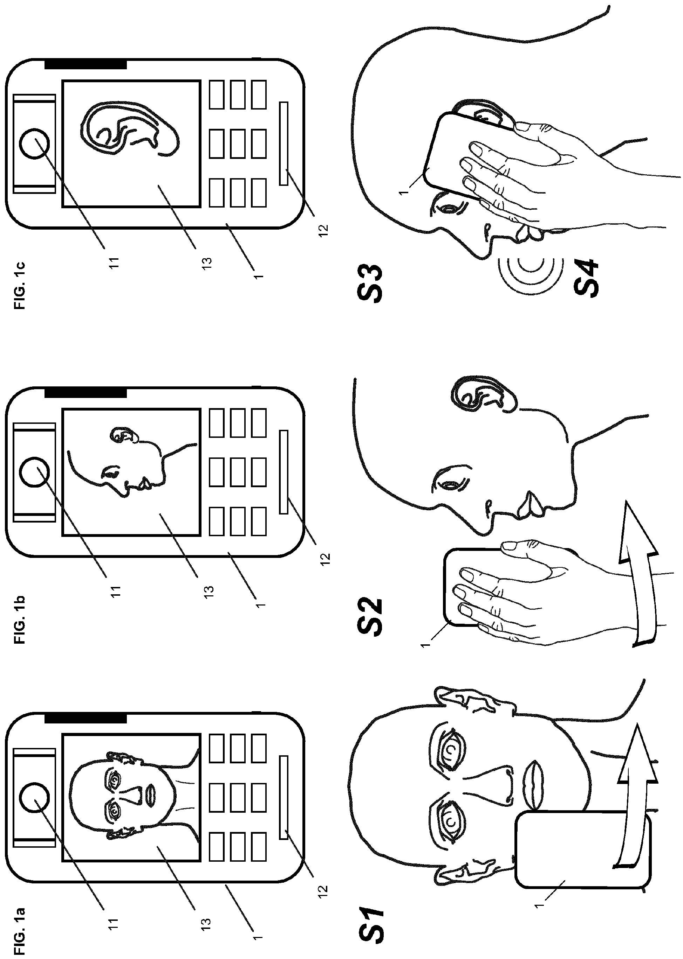

Figures 1a, 1b and 1c illustrate a mobile station 1 provided with a biometric authentication system designed for executing at least a first inventive authentication method. The mobile station 1 comprises a user interface of any kind, a camera 11, a microphone 12, a display 13 and computer modules, communication modules and networking modules with the related operating system and software modules. Further, program modules of the biometric system are implemented in the mobile station 1 that allow performing authentication of the holder of the mobile station according to the methods described above.

The inventive method involves sequential execution of processes S1, ..., S4 that provide biometric information having a high level of redundancy. The processes of capturing redundant biometric information from the user of the mobile station are executed while the user is initiating or accepting a call that involves a typical movement of the mobile station 1 held with the left or right hand of the user. The movements illustrated in figures 1a to 1c are identical to the movements an average user is typically performing when accepting a call. Since there is no difference in the standard activities of the user and the process of initiating or accepting a call the user will not be required to perform specific authentication activities and will therefore not even notice that authentication processes are in progress. Since the user will not be disturbed by authentication processes the inventive method will have highest possible acceptability.

Further, the typical movement of the user, when transferring the mobile station to his ear, has an influence on the authentication procedures.

Figure 1a shows the user with the mobile station 1 in front of his head. The user may have received a call that is signalled on the mobile station and is looking up the calling party on the display. During this time biometric data can be collected by the camera 11 from the front side of the face of the user. A picture, as symbolically shown on the display 13 of the mobile station 1, is taken and forwarded to a local or centralised authentication server.

After the user has accepted or initiated the call, the mobile station 1 will be guided typically in an angle of approximately 90° around the head from the front side to the left or right side of the user. During this movement further optical data are captured from the head of the user. On the display of the mobile station 1 the captured side profile of the user is symbolically shown.

Subsequently the mobile station is approaching the ear of the user, for which optical data are captured as well. At this stage, the image of the ear is symbolically shown on the display 13.

After the connection with the called party or calling party has been set up, conversation starts. Preferably in an initial period of the call, data of the voice of the user are collected for authentication purposes.

Within a single routine movement, biometric data from the head of the user have been collected that allow identification of numerous unique strong biometric characteristics of the user. Information that is routinely collected within seconds has considerable redundancy, which is desirable for compensating for a lack of permanence that is unavoidable for a high percentage of users. Users often change the appearance by wearing different glasses, jewellery such as earrings, or changing of the hair dressing leading for example to a partial coverage of the ear.

Due to the redundancy of the captured biometric information, failure to authenticate a specific characteristic will not lead to a failure of the complete authentication suite. In the event that a characteristic has not been correctly captured, then the redundancy of the information allows authentication of the user by means of the remaining characteristics. The system is therefore tolerant towards changes of the appearance of the user.

A failure of matching a characteristic can have three causes. Possibly, the characteristic has been covered by an object, such as hairs, glasses or a head scarf. The system will therefore avoid a false rejection by identifying the cause of the failure, e.g. by identifying such an object.

Further, a failure may be caused by insufficient optical data, e.g. due to an abnormal movement of the mobile station. Also in this case, a false rejection is avoided by identifying the status of having insufficient optical data.

However, a failure of matching a characteristic can also be caused by the fact that the captured data relate to the characteristic of another person. In the absence of the first two situations, the disturbance of an object or a lack of sufficient optical data, a true authentication failure is reported and the person under test is rejected.

The inventive method provides therefore highest possible tolerance towards lack of permanence of the user while maintaining false acceptance rate and false rejection rate with the above measures and the comparably high number of processed characteristics at a very low level.

Further, the inventive method incorporates learning or adaptation techniques and corresponding software modules that allow adaptation to changes of the appearance of the user. If the user has been correctly authenticated, while a characteristic has not been matched, then the data collected for this failed characteristic are stored in the enrolment database, if the quality of the optical data is sufficient. If for example the user has started to wear an earring the related image is of value in view of future authentications.

Next time the user is authenticated, data of the characteristics of the ear can be compared with data collected during initial enrolment as a first option and with the data collected during a subsequent authentication process as a second option. The inventive method therefore allows automatic adaptation to different appearances of a user, thus avoiding the strict requirement of "PERMANENCE" stipulated in [1] as described above. Since the adaptations to the user are performed under adherence to strong authentication of the remaining characteristics, optimal security is maintained. Allowing tolerance in view of "PERMANENCE", excepting and adapting to various appearances of the same user further supports "ACCEPTABILITY" of the inventive method.

Implementation of the inventive method involving capturing various biometric characteristics is successfully reached due to fast and automatically capturing biometric data while picking up or initiating a call. Within this routine activity of the user the whole process of capturing a variety of biometric data is performed. Hence, speed is the key of success to this process of fast sequential redundant authentication of the user of the mobile station 1. This speed for capturing biometric data is reached by exploiting simple activities of the user that are recurrently performed. Modern data processes, particularly signal processors, however allow processing the collected data without delay.

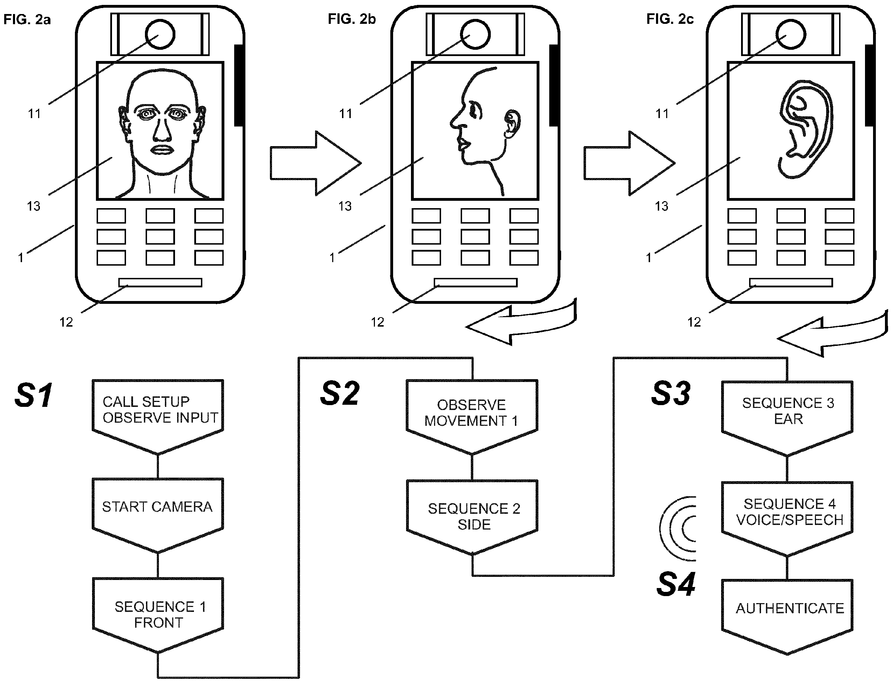

Figures 2a, 2b and 2c show a simple flow diagram of a sequence of processes preferably within the short period of accepting or initiating a real call or a simulated call. As mentioned above authentication can be performed automatically by receiving or initiating a call to another party. However, the biometric system can also call the user for executing an authentication procedure. For example, if a trust level maintained in the mobile station drops below a certain threshold, the biometric system may initiate a call to the user that is signalled for example by ringing in the same manner as is done for a standard call or alternatively with a signalling tone dedicated for biometric procedures.

For example, on the display the following message may be displayed while ringing is in progress:
"YOUR BIOMETRIC SYSTEM IS CALLING"
"PLEASE PICK UP THE PHONE AND ENTER YOUR PASSWORD"

The user will look at the display for reading information (sequence 1), accept the call by pushing a key, then moving the mobile station towards the ear (sequence 2), approaching the ear (sequence 3) and verbally entering the password (sequence 4).

The biometric system will then authenticate all characteristics including authentication of the voice of the user and verification of the spoken password.

Alternatively the biometric system can call the user and offer a challenge as follows:
"YOUR BIOMETRIC SYSTEM IS CALLING"
"PLEASE PICK UP THE PHONE AND ENTER YOUR DATE OF BIRTH"

The biometric system will again authenticate all characteristics including authentication of the voice and the spoken response of the user.

Still further the biometric system can call the user and offer a random challenge as follows:
"YOUR BIOMETRIC SYSTEM IS CALLING"
"PLEASE PICK UP THE PHONE AND REPEAT XXXYYYZZZ"

XXX, YYY, ZZZ represent word fragments that were recorded during enrolment and that were randomly selected and assembled for the present authentication procedure.

Again, the biometric system will authenticate all characteristics including authentication of the voice and the spoken response of the user, by comparing the spoken word or sentence with the correspondingly assembled audio fragments taken from the database of the authentication server as described in [2].

Authentication procedures are as easy to perform as accepting a phone call and are therefore self-explanatory. The whole authentication process will be performed fast and without causing inconvenience to the user. Even if the user would frequently be asked to answer simulated authentication calls this would not cause any particular inconvenience. In the contrary the user is assured that his mobile station is providing high security for his transactions.

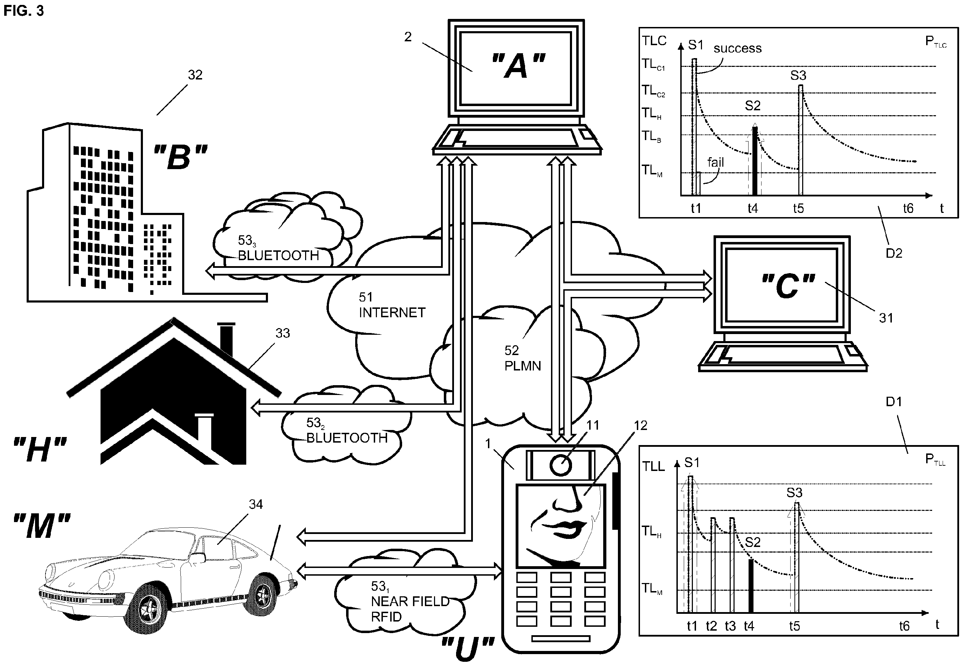

The user may select authentication measures and authentication levels as required for his personal transactions and may program authentication calls. For example the user may program a wake-up call that is simultaneously used as a simulated authentication call. First action in the morning would therefore be authenticating the user and preparing the mobile station for its access key functions for the day as described below with a reference to figure 3. Also with this feature the authentication processes are integrated into the daily routine of the user and will be performed within seconds.

The flow diagram shown in figures 2a, 2b and 2c is simple and can incorporate the steps already detailed above. The authentication suite is started, when a call is signalled or initiated. The camera can be started when the signalling starts or when the call is initiated or accepted by an entry on the keyboard or in man machine interface.

In order to facilitate processing of the optical data additional information can be taken into account. For example, the movement of the mobile station can be observed with an acceleration sensor or a magnetic sensor of a low-cost compass system. With the data delivered by said sensors the different phases of the processes of capturing biometric data can better be controlled. Depending on the angle reached, the camera can automatically be focused for closer distances in order to optimise sharpness of the images captured.

Optical data can be captured with a video data stream or, more preferably, with a number of at least 2 to 3 high resolution photographic images that provide detailed information and can easily be processed in order to extract characteristics for comparison with stored data.

Fig. 3 shows an embodiment of an inventive distributed authentication system with a mobile station 1, a centralised authentication server 2 and several service providers 31, 32, 33, 34 that are interconnected via a plurality of networks 51, 52, 53₁, 53₂, 53₃. Typically service providers 31, 32, 33, 34 and mobile stations 1 can be attached to the distributed authentication system in unlimited number. The system may also comprise more than one authentication server 2 in order to support load sharing or to handle dedicated service requests. The communication and data transfer between said system entities 1, 2, 31, 32, 33, 34 may be performed over a single or a plurality of networks of any kind, such as the Internet that may be based on any carrier network including mobile communication networks and ad hoc networks operating for example according to the Bluetooth standard.

The service providers 31, 32, 33, 34 are examples of all service providers and private and/or public security devices that are used by the user and owner of the mobile station 1 to protect his property. For example, the user has a house 33 and a car 34 that are protected by security devices that deny access to third parties. The user may work in a company 32, in which the access to the company building, specific areas within the building and the computer systems are protected by security devices and mechanisms, including software modules. The user may also be client of banks, warehouses and supermarkets, which are represented in figure 1 by terminal 31. Service requests that reach terminal 31 are processed if the user has been authenticated with the required authentication confidence.

As soon as the required agreements or contracts are available, the services of said service providers 31, 32, 33, 34 can be obtained or ordered by the user via a single device, namely the mobile station 1. In this way, the user can control and administer all his private and public transactions with the mobile station 1 that typically corresponds to a mobile phone, a mobile assistant, a tablet computer or to a stationary computing device, which comprise data processing and storage means and peripheral devices that support a connection to said networks 51, 52, 53₁, 53₂, 53₃. According to instructions of the user, the mobile station 1 may store all or a part of the transactions that were executed within the distributed authentication system in a protocol file.

For the authentication of the user in the distributed authentication network, the following steps are performed.

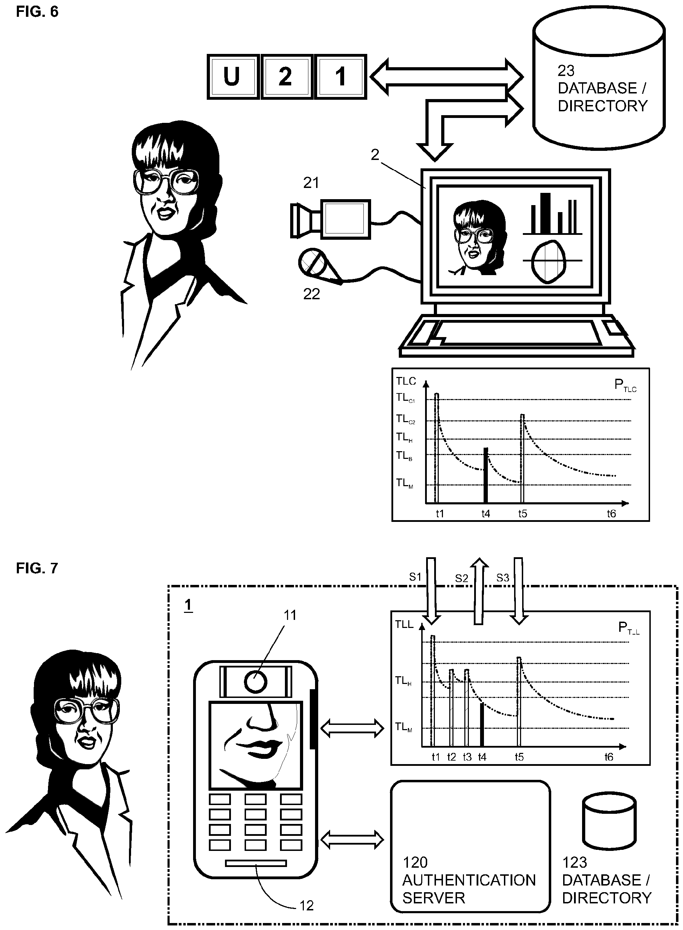

The mobile station 1 performs local authentication procedures in order to authenticate the user of the mobile station 1. This authentication procedures are preferably performed with the method of fast sequential redundant authentication as described above. With this authentication already an extremely strong authentication is reached so that the user can confidently decide that the mobile station 1 after successful authentication can function as a key to all or a selection of his personal resources. Further, the local authentication procedures are preferably performed with an authentication server 120 that is integrated in the mobile station 1 (see figure 7). Alternatively, particularly if the resources of the mobile station 1 are limited, the mobile station may use the distributed biometric system, i.e. the centralised authentication server 2.

Further, in this preferred embodiment, the mobile station 1 is establishing or tracking a variable local trust level TLL that reflects the result of the local authentication procedures.

Preferably it is defined that the mobile station 1 can access the distributed authentication system only then, when a required local trust level has been reached that lies above a first local threshold.

The centralised authentication server 2 performs central authentication procedures in order to authenticate the user of the mobile station 1. Further, the centralised authentication server 2 is establishing or tracking a variable central trust level TLC for the mobile station 1 indicating the result of the local and/or central authentication procedures.

The authentication server 2 or the service provider 31, 32, 33, 34 is then comparing the central trust level TLC with a central threshold TL_{B}; TL_{H}; TL_{C1} TL_{C2} assigned to the requested service and is providing access to the related services only, if the central trust level TLC lies above the central threshold TL_{B}; TL_{H}; TL_{C1} TL_{C2}.

Figure 3 shows protocols P_{TLL}, P_{TLC} of the traces of the local and central trust levels TLL, TLC in separate diagrams D1 and D2. It is shown that local authentication procedures are performed independently from the central authentication server. Local authentication is preferably performed whenever the mobile station 1 is used. Preferably, the above described inventive authentication method is applied, which immediately drives the trust level TLL to a value that is generally very with routine authentication bug can be maximised in combination with the challenge response procedures that still can be executed within seconds.

Hence, local authentication procedures may be performed by the mobile station 1 without any burden or even without being noticed by the user. With local authentication procedures, already high authentication confidence can be achieved. Diagram D1 shows the progression of the local trust level TLL indicating that at time t1 a strong central authentication has been performed, which took the central trust level TLC above the highest threshold value TL_{C1}, which must be exceeded in order to execute high-level transactions or access related services.

Alternatively at time t1 the above described wake-up call could have taken place that has been answered by the user for example by picking up and manipulating the mobile station as shown in figure 1 and responding to a random challenge. Hence, at time t1, an extremely high local trust level TLL has been reached within seconds, allowing the user for example to open his car 34 and entered the office 32 or even to execute bank transactions.

In the event that central authentication has taken place, related information is not only applied to a requested transaction, but also transferred to the mobile station 1, where the value of the local trust level TLL is adjusted accordingly. Hence, at the time t1 the user is authenticated and the trust levels TLL, TLC are synchronised in step S1. An equivalent synchronisation step S3 is taking place at a time t5.

However, if authentication fails, the central trust level TLC and the local trust level TLL would be reduced to zero or to a level TL_{M} selected by the user. This would allow the user to obtain a minimum of services, if strong authentication fails. For example low-level services, such as access to the car or a building, would not be barred. Hence, the inventive method allows applying authentication mechanisms and consequences of the authentication selectively.

Inversely, the centralised authentication server 2 may also accept local trust levels TLL for overriding central trust levels TLC. Since powerful authentication means are provided centrally and locally the owner of the distributed authentication network can select the policy assigning suitable confidence to the entities of the authentication network.

It is also shown that the values of the local trust level TLL and the central trust level TLC are reduced stepwise or continuously over time in order to meet the reduction of authentication confidence. Typically a decrease will be exponentially so that the trust levels TLL, TLC initially will rapidly decay and later on will decrease only slowly. After a high-level transaction has been executed, the central trust level will preferably decay with a step to a level that inhibits executing an additional high-level transaction.

At times t2 and t3 the mobile station 1 has been used, i.e., the user has initiated or received calls and has automatically been authenticated by means of the local authentication server 120 running in the background. Consequently the value of the local trust level TLL has risen above the value of the central trust level TLC. At time t4, the mobile station 1 sent a service request to the authentication server 2 with the local trust level TLL being higher than the central trust level TCL. With the acceptance of the local trust level TLL the centralised authentication server 2 has adjusted the central trust level TLC accordingly in synchronisation step S2. Since local authentication provides considerable authentication confidence, the centralised authentication server 2 preferably accepts requests in the medium or lower range of transaction values. However, the centralised authentication server 2 may avoid an increase to a level that would be in contradiction to agreements and instructions received from the service providers 31, 32, the user and/or the owner of the distributed authentication network.

In further preferred embodiments, the result of the authentication processes is communicated to the other entities of the distributed authentication system, particularly to the service providers 31, 32, .... The other system entities may accept the authentication results that preferably are combined with a timestamp. For example the service providers 31, 32, ... are opening a time window, within which the mobile station 1 may file requests that are granted. In the event that the user is an employee of company "B" shown in figure 3, authentication may be performed at the entrance and a specific user profile may be opened that defines user rights and corresponding validities that can be activated by means of the mobile station 1. The user profile may also combine the grant of specific services with an authentication of any desired level of strength. The application implemented in the mobile station, e.g. a Java application with numerous midlets, as it is typically installed in mobile phones, preferably controls all user actions in the distributed authentication network and requests all required actions from the user. The user who has been authenticated at the entrance may therefore be requested under the guidance of a Java-Application to perform any authentication when requiring a higher-level service.

A security profile and exceptions for the user can easily be programmed and implemented. In comparison to the complexity of the security mechanisms, with which an attacker is confronted, the required communication between the entities of the distributed authentication network remains rather simple. Changes of the authentication strategies for local and central authentication can easily and even randomly be arranged. Most preferably the distributed authentication system preferably uses dual authentication by the authentication server 2 and the mobile station 1. The authentication server 2 may challenge the user to speak a word or sentence, which then is individually analysed by the authentication server 2 and the mobile station 1, which may communicate authentication results over the same or preferably over a separate channel.

The attacker, particularly a man in the middle, will therefore fail to overcome the problem of betraying the authentication mechanisms acting in the mobile station 1, the authentication mechanisms acting in the authentication server 2 and the authentication mechanism, which is based on the comparison of the authentication results obtained in the mobile station 1 and in the authentication server 2.

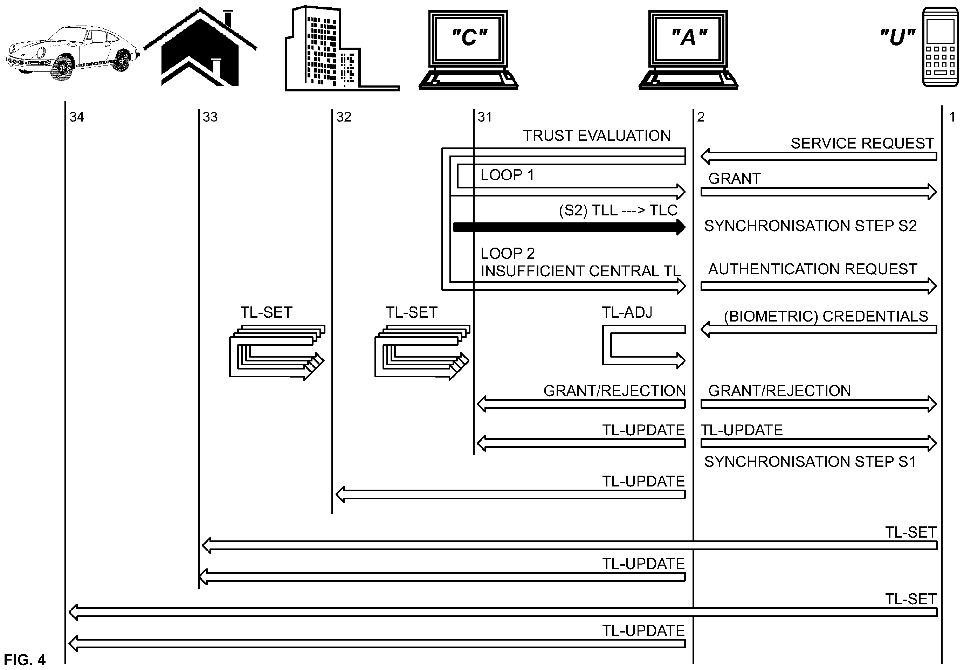

Fig. 4 shows possible communications in the distributed authentication network that are initiated with a service request of the user. The service request is sent from the mobile station 1 to the authentication server 2 or to the related service provider 31, 32, ..., which routes the service request to the centralised authentication server 2. Depending on the service request the centralised authentication server 2 enters at least a first or a second loop. If the central trust level TLC for this mobile station 1 is considered sufficient the requested service is granted (1^{st} loop).

With the service request the mobile station 1 may forward the value of the local trust level TLL that may be higher than the central trust level TLC and may be sufficient to grant the requested service. The authentication server 2 may accept the value of the local trust level TLL or a fraction therefrom as a new central trust level TLC. This is especially advantageous if the user has been absent, e.g. abroad on a business trip, and returns back to the company building. Since the user has frequently used the mobile station 1, the local trust level TLL will typically be rather high. Hence, the authentication server 2 may rely on the authentication confidence established in the mobile station 1 and may provide the user access to the company building without additional authentication. Consequently the authentication server 2 can be dedicated to other tasks that require strong authentication.

In the event that the local trust level TLL and the central trust level TLC are not considered sufficient for the requested service, then the authentication server 2 will send an authentication request to the mobile station 1 asking for standard authentication or modified authentication, if the authentication module in the mobile station 1 supports two or more modes of authentication. Depending on the required strength of authentication and the required central trust level TLC, the authentication server 2 may request simple or advanced authentication, e.g. incorporating random challenge response procedures.

The required value of the central trust level TLC is depending on the requested service for which a threshold has been set by the service provider. Any service provider, including the user, who has incorporated private assets into the distributed authentication system, may set a fixed or variable threshold that alters in function of an occurrence, e.g. the change of time and date.

According to the result of the authentication process the centralised authentication server 2 grants or rejects the service request. The authentication server 2 then distributes messages to the service providers 31, 32, 33, 34 and to the mobile station 1, providing information relating to the result of the authentication, preferably an update of the central trust level TLC, i.e. the authentication confidence the authentication server 2 has established for the user station 1.

Therefore, with a single authentication, the authentication server 2 updates the distributed authentication system or network so that the user can profit from the authentication process that is performed not only for one but for a plurality of transactions. This makes it possible that the mobile station 1 can directly access service providers 31, 32, 33, 34 even then, if they are not online connected to the authentication server 2 later on. The user may enter the company car 34 at the company premises and later on, when the car is parked at another company's premises. As soon as the service provider 31, 32, 33, 34 gets online again, then new status data can be downloaded from the authentication server 2, before the stored trust level has decayed and the service is barred.

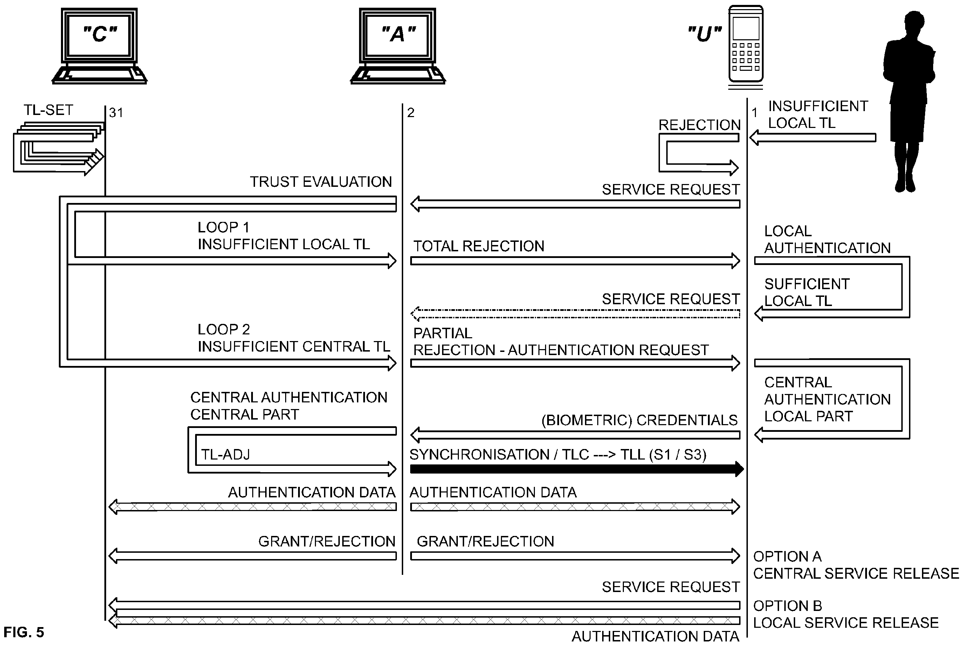

Figure 5 shows further message transfers and activities within the distributed authentication system. In this example, the user tries to despatch a service request, while the local trust level TLL in the mobile station 1 is insufficient for this purpose. Figure 5 illustrates both possible reactions. Preferably the mobile station 1 directly rejects the service request. If the service request has however been despatched together with the value of the insufficient local trust level TLL, then the centralised authentication server 2 will return a total rejection, asking the mobile station 1 to perform local authentication. This situation is avoided if the above described fast sequential redundant authentication method is generally applied.

Loop 2 illustrates the case in which the local trust level TLL is sufficient, but the central trust level TLC is insufficient. In this case the mobile station 1 can access the distributed authentication system, but receives a rejection from the authentication server 2 as described above.

It is illustrated that the authentication processes are distributed within the distributed authentication system with a local authentication part taking place in the authentication server 120 incorporated in the mobile station 1 and a central authentication part taking place in the authentication server 2 that receives requested credentials from the mobile station 1, such as biometric data captured from the user.

After completion of the authentication the local and central trust levels TLL, TLC are synchronised in step S1 or S3. The authentication server 2 then distributes authentication data across the distributed authentication system or network. For example, the authentication server 2 may update the databases used by the system entities, e.g. with biometric data, passwords, and authentication profiles.

Figure 6 relates to the registration of a user at the authentication server 2 that for simplicity also acts as registration authority. For a preferred authentication method the registration process is performed as follows. The client provides credentials to a registration officer who verifies the client's credentials and establishes a non-biometric client profile. Then, in order to establish a biometric client profile, numerous speech elements or speech segments are dictated, which are repeated by the client. For the corresponding speech elements expressed by the client, biometric audio and video samples are simultaneously captured by means of recording devices 21, 22 (e.g. a microphone and a digital camera) and stored in a database 23. In order to enable the authentication server 2 to create all desired challenges all required speech elements, together with the related gestures of lips and/or tongue, are captured and stored. Typically the client will be asked to repeat all letters of the alphabet as well as all relevant numbers, e.g., 1-100, and 1000. The recorded speech elements can therefore be assembled and concatenated, in order to generate new words or sentences. In addition, information is stored, which identifies the captured biometric elements or data. The authentication server can therefore request the mobile station 1 at a later stage to provide biometric data for any challenge that may be generated by the authentication server 2. The authentication server 2 can then analyse, whether the audio and video data captured for the response correspond to the assembled audio and video data.

This authentication system is preferably implemented in the mobile station 1 as well. For this purpose the authentication server 2 may transfer all registration data to the database provided in the mobile station 1. Duplication of the authentication system requires therefore little effort only.

Alternatively enrolment of the user can also be performed with the mobile station if it is equipped with an enrolment program accordingly.

On the screen of the authentication server 2 a waveform for the word "two" is illustrated as well as a spectrogram of the waveform representing a typical pattern for this client. The authentication processes may therefore perform speech and voice recognition as required. The authentication server 2 may therefore establish authentication strategies that are altered preferably from service request to service request, asking for local and/or central authentication with specific authentication modes.

Figure 7 shows the mobile station 1 with an authentication server 120 and a database 123 used for performing the above described authentication procedures. Further shown are a protocol P_{TLL} of the local trust level of figure 1, as well as authentication points and/or synchronisation points S1, S2, S3.

### Literature

[1] A. Jain et al., BIOMETRICS, Personal Identification in Networked Society, Kluwer Academic Publication, Massachusetts 2002
[2] EP1962280A1
[3] US2010/291909A1
[4] EP2037421A1
[5] US2007/250322A1

## Claims

1. Method for performing biometric authentication with a mobile station (1) that is provided with a camera (11) and a display (13) on its front side and that is provided with an integrated authentication server (120) or is connectable to an authentication server (2) via a network such as mobile communications network (52), comprising the steps of
a) enrolling the user in the biometric system by capturing and storing biometric data relating to a plurality of characteristics that belong to the user's head and that are normally exposed to the mobile station during the process of accepting a call;
b) initiating or accepting a call on the mobile station (1);
c) activating the camera (11) when initiating, receiving, or accepting the call and capturing optical information from the face or from the ear of the user between the setup or acceptance of the call and the start of the conversation and transferring the captured optical information to the authentication server (2);
d) authenticating the user by comparing the optical information captured after the activation of the camera (11) with the biometric data previously captured during the enrolment process; and
e) performing defined actions depending on the result of the authentication
**characterised by** the steps of capturing optical information after the activation of the camera (11) during the movement of the mobile station (1) towards the ear of the user from the front profile of the user's face, the side profile of the user's face and the ear of the user in one or a plurality of sequences and authenticating the user by comparing the optical information with the biometric data previously captured during the enrolment process, by identifying and matching characteristics that had been captured from different angles.

2. Method according to claim 1, comprising the steps of performing defined actions, such as providing authorisation for one or more categories of transactions or transactions with a transaction value depending on the trust level obtained by the performed authentication process.

3. Method according to claim 1 or 2, comprising the steps of changing a trust level in accordance with the results of the performed authentication process with regard to the number of identified and matched characteristics.

4. Method according to one of the claims 1 - 3, comprising the steps of continuously capturing video data or sequentially capturing images of the user, which are compared with video data captured during an enrolment, and/or comprising the steps of capturing audio data of the user during a period after starting the conversation and authenticating the user's voice.

5. Method according to one of the claims 1 - 4, comprising the steps of capturing and storing biometric data during the enrolment process that relate to the front profile of the user's face and/or parts thereof, the side profile of the user's face and/or parts thereof and the user's ear.

6. Method according to one of the claims 1 - 5, comprising the steps of providing the mobile station (1) to the rightful user or authenticating the user of the mobile station (1) and then providing visual and/or aural instructions by the mobile station (1) for performing enrolment of the user in the biometric authentication system, including
a) instructing the user to manipulate the mobile station (1) in the manner executed when accepting or initiating a call, thus moving the mobile station (1) from a position in front of the user to the ear of the user; or
b) instructing the user to position the mobile station in at least two of a number of positions, each suitable for capturing a characteristic of the user's head, such as the front profile of the user's face, the side profile of the user's face and the user's ear.

7. Method according to one of the claims 1 - 6, comprising the steps of capturing and storing biometric data during the enrolment process that relate to the front profile of the user's face and/or parts thereof, the side profile of the user's face and/or parts thereof and the user's ear and/or comprising the steps of initiating or simulating a call to the mobile station (1) in order to perform enrolment procedures or in order to authenticate the user and/or updating and restored user data with the data captured during a successful authentication suite.

8. Method comprising the steps of performing the first authentication of the user according to one of the claims 1 - 7 for obtaining a fixed or variable trust level that allows to perform a transactions of a first group of transactions or for a transaction having a limited transaction value and performing a second authentication of the user with a further method for obtaining a fixed or variable trust level that allows to perform high-level transactions of a second group of transactions or for a transaction exceeding said limited transaction value.

9. Method according to claim 8, comprising the steps of using a second authentication method that involves simultaneously capturing related audio and video information in response to a challenge that preferably consists of randomly assembled speech fragments for which corresponding speech fragments had been captured from the user during an enrolment process.

10. Method according to one of the claims 1 - 9 comprising the steps of
a) the mobile station (1) performing local authentication procedures for the user of the mobile station (1) and tracking a variable local trust level (TLL) indicating the result of the local authentication procedures and accessing or being provided access to the distributed authentication system only, if the local trust level (TLL) lies above a first local threshold (TL_{M});
b) the authentication server (2) performing central authentication procedures for the user of the mobile station (1) and tracking a variable central trust level (TLC) for the mobile station (1) indicating the result of the central authentication procedures;
c) the authentication server (2) or a service provider (31, 32, 33, 34) comparing the central trust level (TLC) with a central threshold (TL_{B}; TL_{H}; TL_{C1} TL_{C2}) assigned to the requested service and providing access to the related services only, if the central trust level (TLC) lies above the central threshold (TL_{B}; TL_{H}; TL_{C1} TL_{C2}).

11. Method according to claim 10, comprising the steps of transferring the value of the local trust level (TLL) together with each service request to the authentication server (2) and/or of synchronising the local trust level (TLL) tracked in the mobile station (1) with the central trust level (TLC) tracked in the authentication server (2) whenever a service has been requested or whenever a central authentication procedure has been performed.

12. Method according to claim 11, comprising the steps of daily registering occurrence and preferably time of external influences sensed during the use, handling or transport of the mobile station, such as
a) influences caused by characteristic movements during the walk of the user; and/or
b) influences of local networks that are routinely passed by the user; and/or
c) calls to subscribers that are routinely called; and/or
d) sequences of command entries that are routinely executed.

13. Method according to one of the claims 1-12, comprising the steps of reducing or eradicating the central trust level (TLC), if
a) local or central authentication fails; or
b) unusual behaviour of the user or unusual handling of the mobile station (1) is detected;
and preferably requesting the user to perform authentication according to the second method defined in claim 10 or 11.

14. Mobile station provided with a camera (11) and a display (13) on its front side and incorporating a biometric authentication system operating according to a method as defined in one of the claims 1 to 13.

## Patentansprüche

1. Verfahren zur Durchführung biometrischer Authentisierung mit einem Mobilendgerät (1), das mit einer Kamera (11) und einem Display (13) an seiner Frontseite versehen ist und das mit einem integrierten Authentisierungserver (120) versehen oder mit einem Authentisierungserver (2) über ein Netzwerk, wie ein mobiles Kommunikationsnetzwerk (52), verbindbar ist, umfassend die Schritte
a) Registrierung des Benutzers im biometrischen System, indem biometrische Daten aufgenommen und gespeichert werden, die eine Vielzahl von Charakteristika betreffen, die den Kopf des Benutzers betreffen, und die gegenüber dem Mobilendgerät während des Vorgangs der Annahme eines Anrufs normalerweise ausgestellt sind;
b) Initialisierung oder Annahme eines Anrufs beim Mobilendgerät (1);
c) Aktivierung der Kamera (11) wenn der Anruf initialisiert, empfangen oder akzeptiert wird und Aufnahme optischer Informationen vom Gesicht oder vom Ohr des Benutzers zwischen dem Aufbau oder der Annahme des Anrufs und dem Beginn der Konversation und Übertragung der aufgenommenen optischen Informationen zum Authentisierungserver (2);
d) Authentisierung des Benutzers durch Vergleich der nach der Aktivierung der Kamera (11) aufgenommenen optischen Informationen mit biometrischen Daten, die zuvor während des Registrierungsprozesses aufgenommen wurden; und
e) Durchführung definierter Aktionen in Abhängigkeit vom Resultat der Authentisierung
**gekennzeichnet durch** die Schritte der Aufnahme optischer Informationen nach der Aktivierung der Kamera (11) während der Bewegung des Mobilendgeräts (1) gegen das Ohr des Benutzers vom Frontprofil des Gesichts des Benutzers, dem Seitenprofil des Gesichts des Benutzers und des Ohrs des Benutzers in einer oder mehreren Sequenzen und Authentisierung des Benutzers durch Vergleich der optischen Informationen mit den zuvor während des Registrierungsverfahrens aufgenommenen biometrischen Daten, durch Identifikation und Abgleich der Charakteristiken, die aus verschiedenen Winkeln aufgenommen wurden.

2. Verfahren nach Anspruch 1, umfassend die Schritte der Durchführung definierter Aktionen, wie die Vergabe der Autorisierung für eine oder mehrere Kategorien von Transaktionen oder Transaktionen mit einem Transaktionswert in Abhängigkeit des Vertrauensniveaus, das beim durchgeführten Authentisierungsvorgang ermittelt wurde.

3. Verfahren nach Anspruch 1 oder 2, umfassend die Schritte des Wechsels des Vertrauensniveaus in Übereinstimmung mit dem Resultat des durchgeführten Authentisierungsvorgangs unter Berücksichtigung der Anzahl der identifizierten und übereinstimmenden Charakteristiken.

4. Verfahren nach einem der Ansprüche 1 - 3, umfassend die Schritte der kontinuierlichen Aufnahme von Videodaten oder der sequenziellen Aufnahme von Bildern des Benutzers, die mit Videodaten verglichen werden, die während des Registrierungsvorgangs aufgenommen wurden, und/oder umfassend die Schritte der Aufnahme von Audiodaten des Benutzers während einer Periode nach Beginn der Konversation und Authentisierung der Stimme des Benutzers.

5. Verfahren nach einem der Ansprüche 1 - 4, umfassend die Schritte der Aufnahme und Speicherung biometrischer Daten während des Registrierungsvorgangs, die das Frontprofil des Gesichts des Benutzers und/oder Teile davon, das Seitenprofil des Gesichts des Benutzers und/oder Teile davon und das Ohr des Benutzers betreffen.

6. Verfahren nach einem der Ansprüche 1 - 5, umfassend die Schritte der Übergabe des Mobilendgeräts (1) an den rechtmässigen Benutzer oder Authentisierung des Benutzers des Mobilendgeräts (1) und dann Abgabe visueller und/oder akustischer Instruktionen durch das Mobilendgerät (1) zur Durchführung der Registrierung des Benutzers im biometrischen Authentisierungssystem, einschliesslich
a) Instruktion des Benutzers zur Manipulation des Mobilendgeräts (1) in der Art ausgeführt wenn ein Anruf angenommen oder initialisiert wird, wobei das Mobilendgerät (1) von einer Position in Front des Benutzers zum Ohr des Benutzers bewegt wird; oder
b) Instruktion des Benutzers zur Positionierung des Mobilendgeräts in wenigstens zwei aus einer Anzahl von Positionen, wobei jede geeignet ist für die Aufnahme einer Charakteristik des Kopfs des Benutzers, wie das Frontprofil des Gesichts des Benutzers, das Seitenprofil des Gesichts des Benutzers und das Ohr des Benutzers.

7. Verfahren nach einem der Ansprüche 1 - 6, umfassend die Schritte der Aufnahme und Speicherung biometrischer Daten während des Registrierungsvorgangs die das Frau Profil des Gesichts des Benutzers und/oder Teile davon, das Seitenprofil des Gesichts des Benutzers und/oder Teile davon und das Ohr des Benutzers betreffen und/oder umfassend die Schritte der Initialisierung oder der Simulation eines Anrufs an das Mobilendgerät (1) um den Registrierungsvorgang durchzuführen oder den Benutzer zu authentisieren und/oder Aufdatierung und Wiederherstellung von Benutzerdaten mit den Daten, die während eines erfolgreichen Authentisierungsvorgangs aufgenommen wurden.

8. Verfahren umfassend die Schritte der Durchführung der ersten Authentisierung des Benutzers nach einem der Ansprüche 1 - 7 zur Ermittlung eines festen oder variablen Vertrauensniveaus, welches die Durchführung einer Transaktion einer ersten Gruppe von Transaktionen oder einer Transaktion erlaubt, die einen limitierten Transaktionswert aufweist, und Durchführung einer zweiten Authentisierung des Benutzers mit einem weiteren Verfahren zur Ermittlung eines festen oder variablen Vertrauensniveaus, welches die Durchführung von hochwertigen Transaktionen einer zweiten Gruppe von Transaktionen oder einer Transaktion erlaubt, die den genannten limitierten Transaktionswert übersteigt

9. Verfahren nach Anspruch 8, umfassend die Schritte der Verwendung eines zweiten Authentisierungsverfahrens, das die simultane Aufnahme zueinander korrespondierender Audio- und Videoinformationen involviert, in Erwiderung auf eine Anfrage, die vorzugsweise aus zufällig zusammengesetzten Sprachfragmenten besteht, für die entsprechende Sprachfragmente vom Benutzer während des Registrierungsvorgangs aufgenommen wurden.

10. Verfahren nach einem der Ansprüche 1 - 9 umfassend die Schritte, gemäss denen
a) das Mobilendgerät (1) lokale Authentisierungsprozeduren für den Benutzer des Mobilendgeräts (1) durchführt und ein variables lokales Vertrauensniveau (TLL) verfolgt, welches das Resultat der lokalen Authentisierungsprozeduren anzeigt und Zugang oder Gewährung von Zugang zum verteilten Authentisierungssystem nur dann, falls das lokale Vertrauensniveau (TLL) oberhalb eines ersten lokalen Schwellwerts (TL_{M}) liegt;
b) der Authentisierungserver (2) zentrale Authentisierungsprozeduren für den Benutzer des Mobilendgeräts (1) durchführt und ein variables zentrales Vertrauensniveau (TLC) für das Mobilendgerät (1) verfolgt, welches das Resultat der zentralen Authentisierungsprozeduren anzeigt;
c) der Authentisierungserver (2) oder ein Dienstleister (31, 32, 33, 34) das zentrale Vertrauensniveau (TLC) mit einem zentralen Schwellwert (TL_{B}; TL_{H}; TL_{C1} TL_{C2}) verbreitet, der der angeforderten Dienstleistung zugeordnet ist und Gewährung von Zugang zu den betreffenden Dienstleistungen nur dann, falls das zentrale Vertrauensniveau (TLC) oberhalb des zentralen Schwellwerts (TL_{B}; TL_{H}; TL_{C1} TL_{C2}) liegt.

11. Verfahren nach Anspruch 10, umfassend die Schritte des Transfers des Werts des lokalen Vertrauensniveaus (TLL) zusammen mit einer Dienstleistungsanforderung an den Authentisierungserver (2) und/oder der Synchronisation des lokalen Vertrauensniveaus (TLL), das im Mobilendgerät (1) verfolgt wird, mit dem zentralen Vertrauensniveau (TLC), das im Authentisierungserver (2) verfolgt wird, wann immer eine Dienstleistung angefordert wurde oder wann immer eine zentrale Authentisierungsprozedur durchgeführt wurde.

12. Verfahren nach Anspruch 11, umfassend die Schritte der täglichen Registrierung des Auftretens und vorzugsweise des Zeitpunkts externer Einflüsse, die während des Gebrauchs, der Manipulation oder des Transports des Mobilendgeräts erfasst wurden, wie
a) Einflüsse verursacht durch charakteristische Bewegungen während des Gehens des Benutzers; und/oder
b) Einflüsse lokaler Netzwerke, die vom Benutzer routinemässig passiert werden; und/oder
c) Anrufe zu Teilnehmern die regelmässig angerufen werden; und/oder
d) Eingaben von Kommandosequenzen, die regelmässig ausgeführt werden.

13. Verfahren nach einem der Ansprüche 1-12, umfassend die Schritte der Reduktion oder des Auslöschens des zentralen Vertrauensniveaus (TLC), falls
a) die lokale oder zentrale Authentisierung versagt; oder
b) unübliches Verhalten des Benutzers oder unübliche Manipulation des Mobilendgeräts (1) detektiert wird;
und vorzugsweise der Anforderung an den Benutzer eine Authentisierung nach dem zweiten Authentisierungsverfahren gemäss den Ansprüchen 10 oder 11 durchzuführen.

14. Mobilendgerät mit einer Kamera (11) und einem Display (13) auf dessen Frontseite und umfassend ein biometrisches Authentisierungssystem, welches nach einem Verfahren arbeitet, wie es in einem der Ansprüche 1 - 13 definiert ist.

## Revendications

1. Procédé pour effectuer une authentification biométrique avec une station mobile (1) comprenant une caméra (11) et un écran d'affichage (13) sur sa face avant et dotée d'un serveur d'authentification intégré (120) ou connectable à un serveur d'authentification (2) via un réseau tel qu'un réseau de communication mobile (52), comprenant les étapes consistant à
a) enrôler l'utilisateur dans le système biométrique en capturant et stockant des données biométriques relatives à une pluralité de caractéristiques appartenant à la tête de l'utilisateur et qui sont normalement exposé à la station mobile pendant le processus d'acceptation d'un appel;
b) initier ou accepter un appel sur la station mobile (1);
c) activer la caméra (11) lors de l'initiation, réception ou acceptation d'un appel et capturer des informations optiques du visage ou de l'oreille de l'utilisateur entre la configuration ou l'acceptation de l'appel et le début de la conversation et le transfert des informations optiques capturées au serveur d'authentification (2);
d) authentifier l'utilisateur en comparant les informations optiques enregistré après l'activation de la caméra (11) avec les données biométriques précédemment capturées pendant le processus d'inscription; et
e) effectuer des actions définies en fonction du résultat de l'authentification.
**caractérisé par** les étapes de saisie d'information optique après l'activation de la camera (11) pendant le mouvement de la station mobile (1) vers l'oreille de l'utilisateur du profile frontal du visage de l'utilisateur, du profil latéral du visage de l'utilisateur et de l'oreille de l'utilisateur par une ou plusieurs séquences et authentifiant l'utilisateur en comparaissant l'information optique aux données biométriques saisie avant pendant le processus d'inscription, en identifiant et validant des caractéristiques qui ont été saisies par des angles différents.

2. Procédé selon la revendication 1, comprenant les étapes consistant à exécuter des actions définies, telles que fournir une autorisation pour une ou plusieurs catégories de transactions ou de transactions avec une valeur de transaction en fonction du niveau de confiance obtenu par le processus d'authentification exécuté.

3. Procédé selon la revendication 1 ou 2, comprenant les étapes à modifier un niveau de confiance en fonction des résultats du processus d'authentification exécuté en ce qui concerne le nombre de caractéristiques identifiées et validées.

4. Procédé selon une des revendications 1 à 3, comprenant les étapes de capture continue de données vidéo ou de capture séquentielle d'images de l'utilisateur, qui sont comparées avec des données vidéo capturées pendant une inscription, et/ou comprenant les étapes de capture de données audio de l'utilisateur pendant une période après le début de la conversation et l'authentification de la voix de l'utilisateur.

5. Procédé selon une des revendications 1 à 4, comprenant les étapes consistant à capturer et stocker des données biométriques pendant le processus d'inscription qui concernent le profil frontal du visage de l'utilisateur et/ou des parties de celui-ci, le profil latéral du visage de l'utilisateur et/ou des parties de celui-ci et l'oreille de l'utilisateur.

6. Procédé selon une des revendications 1 à 5, comprenant les étapes consistant à fournir la station mobile (1) à l'utilisateur légitime ou à authentifier l'utilisateur de la station mobile (1) et à fournir ensuite des informations visuelles et/ou des instructions auditives par la station mobile (1) pour effectuer l'inscription de l'utilisateur dans le système d'authentification biométrique, incluant
a) l'instruction à l'utilisateur de manipuler la station mobile (1) de la manière exécutée lors de l'acceptation ou du lancement d'un appel la station mobile (1) d'une position devant l'utilisateur vers l'oreille de l'utilisateur; ou
b) la demande à l'utilisateur de positionner la station mobile dans au moins deux positions, chacune étant adaptée pour capturer une caractéristique de la tête de l'utilisateur, telle que le profil frontal du visage de l'utilisateur, le profil latéral du visage de l'utilisateur et l'oreille de l'utilisateur.

7. Procédé selon une des revendications 1 à 6, comprenant les étapes consistant à capturer et stocker des données biométriques pendant le processus d'enrôlement qui concernent le profil frontal du visage de l'utilisateur et/ou des parties de celui-ci, le profil latéral du visage de l'utilisateur et/ou leurs parties et l'oreille de l'utilisateur et/ou comprenant les étapes consistant à initier ou simuler un appel à la station mobile (1) afin d'exécuter des procédures d'inscription ou pour authentifier l'utilisateur et/ou mettre à jour et restaurer des données d'utilisateur avec les données capturées au cours d'une suite d'authentification réussie.

8. Procédé comprenant les étapes consistant à effectuer la première authentification de l'utilisateur selon une des revendications 1 à 7 pour obtenir un niveau de confiance fixe ou variable qui permet d'effectuer des transactions d'un premier groupe de transactions ou pour une transaction ayant une valeur de transaction limitée et effectuer une seconde authentification de l'utilisateur avec un autre procédé pour obtenir un niveau de confiance fixe ou variable qui permet d'effectuer des transactions de haut niveau d'un deuxième groupe de transactions ou pour une transaction dépassant ladite valeur de transaction limitée.

9. Procédé selon la revendication 8, comprenant les étapes consistant à utiliser une deuxième méthode d'authentification qui consiste à capturer simultanément des informations audio et vidéo reliées en réponse à un défi consistant de préférence en des fragments de parole assemblés aléatoirement pour lesquels des fragments de parole correspondants ont été capturés pendant un processus d'inscription.

10. Procédé selon une des revendications 1 - 9 comprenant les étapes de
a) la station mobile (1) effectuant des procédures d'authentification pour l'utilisateur de la station mobile (1) et suivant le niveau de confiance local (TLL) indiquant le résultat de la procédure d'authentification locale et accédant ou recevant accès au système d'authentification distribué seulement si le niveau de confiance local (TLL) est supérieure à un premier seuil local (TL_{M});
b) le serveur d'authentification (2) exécutant des procédures d'authentification centrale pour l'utilisateur de la station mobile (1) et suivant un niveau de confiance central variable (TLC) pour la station mobile (1) indiquant le résultat des procédures d'authentification centrale;
c) le serveur d'authentification (2) ou un fournisseur de service (31, 32, 33, 34) comparant le niveau de confiance central (TLC) à un seuil central (TLB, TLH, TLC1 TLC2) associé au service demandé et fournissant un accès à les services associés uniquement, si le niveau de confiance central (TLC) est supérieur au seuil central (TL_{B}, TL_{H}, TL_{C1}, TL_{C2}).

11. Procédé selon la revendication 10, comprenant les étapes de transfert de la valeur du niveau de confiance local (TLL) avec chaque demande de service au serveur d'authentification (2) et/ou de synchronisation du niveau de confiance local (TLL) suivi dans la station mobile (1) avec le niveau de confiance central (TLC) suivi dans le serveur d'authentification (2) chaque fois qu'un service a été demandé ou chaque fois qu'une procédure d'authentification centrale a été effectuée.

12. Procédé selon la revendication 11, comprenant les étapes d'enregistrement quotidien et de préférence le temps des influences externes détectées pendant l'utilisation, la manipulation ou le transport de la station mobile, tels que
a) les influences provoquées par des mouvements caractéristiques pendant la marche de l'utilisateur; et/ou
b) les influences des réseaux locaux qui sont régulièrement rencontrés par l'utilisateur; et/ou
c) les appels aux abonnés qui sont appelés de façon régulière; et/ou
d) les séquences d'entrées de commande qui sont exécutées de façon régulière.

13. Procédé selon une des revendications 1 à 12, comprenant les étapes de réduction ou d'éradication du niveau de confiance central (TLC), si
a) l'authentification locale ou centrale échoue; ou
b) un comportement inhabituel de l'utilisateur ou un traitement inhabituel de la station mobile (1) est détecté;
et demandant de préférence à l'utilisateur d'effectuer une authentification selon le deuxième procédé défini dans la revendication 10 ou 11.

14. Station mobile munie d'une caméra (11) et d'un écran d'affichage (13) sur sa face avant et incorporant un système d'authentification biométrique fonctionnant selon un procédé tel que défini dans une des revendications 1 à 13.
